# EUROPEAN PATENT SPECIFICATION

(11) **EP 4 253 016 B1**
(45) Date of publication and mention of the grant of the patent: **11.06.2025**
(21) Application number: 22275036.6
(22) Date of filing: 29.03.2022
(51) Int. Cl.: B29C 70/86, B29C 70/54

(54) **METHOD OF PRODUCING A UNIVERSAL JOINT ASSEMBLY AND UNIVERSAL JOINT ASSEMBLY**
VERFAHREN ZUR HERSTELLUNG EINER UNIVERSALGELENKANORDNUNG UND UNIVERSALGELENKANORDNUNG
PROCÉDÉ DE FABRICATION D'UN ENSEMBLE JOINT UNIVERSEL ET ENSEMBLE JOINT UNIVERSEL

(43) Date of publication of application: 04.10.2023
(73) Proprietor: Crompton Technology Group Limited, Solihul, West Midlands B90 4SS (GB)
(72) Inventor: BEALE, Thomas, Solihull West Midlands B90 4SS (GB)
(74) Representative: Dehns

(56) References cited:
- EP-A1- 0 029 093
- DE-A1- 3 321 348
- US-A- 4 289 557

## Description

### Technical Field

The present disclosure relates to fibre-reinforced polymer (FRP) shafts and, more particularly, to universal joint assemblies of FRP shafts and methods of manufacturing universal joint assemblies of FRP shafts.

### Background

A universal joint (also called a Cardan joint) is a coupling between two shafts which allows rotational motion to be transferred between the shafts even when their axes are not aligned. In a typical universal joint, two shafts are pivotally connected to a common joining member (which is normally a cruciform shape) about axes that are perpendicular to each other and perpendicular to central axes along which the respective shafts extend. When the first shaft is rotated around its central axis, the joining member transfers this into rotation of the second shaft around its respective central axis.

Universal joints are common in equipment with moving parts. For instance, an actuator within an aeroplane wing may comprise several shafts connected by one or more universal joints. This allows the actuator to operate even as it flexes with the wing during flight.

Composite materials such as fibre-reinforced polymer can be used to produce shafts with a lower mass than their metallic equivalents. These composite shafts can be used to form universal joints by attaching metal end fittings onto each composite shaft, and then coupling the metal end fittings with a joining member to form the universal joint. However, these joints require a lot of manufacturing and assembly steps, can be heavy, and can be susceptible to misalignment and rotational backlash or play. US 4289557 A discloses a method for joining a composite material shaft to a metal end member such as a yoke portions of a universal joint. A large number of parallel subsurface channels or grooves which are cut or introduced by forming methods into a metallic sleeve portion of the metallic end member. A first layer of fibers of the composite material shaft is then wound within or across these grooves, and subsequent layers are wound preferably perpendicular to each other.

An improved approached may be desired.

### Summary

According to a first aspect of the present disclosure there is provided a method of producing a universal joint assembly comprising:
providing a joining member for forming a universal joint, said joining member comprising a first pivot and a second pivot;
applying continuous fibre reinforcement and a polymer matrix to a form including said joining member to create a single fibre-reinforced polymer structure in which the joining member is embedded;
splitting said fibre-reinforced structure into a first fibre-reinforced polymer shaft and a second fibre-reinforced polymer shaft that are coupled together by the joining member to form a universal joint.

Thus, it will be appreciated by those skilled in the art that the method provided may allow universal joint assemblies to be produced more easily and cheaply than previously, because only a small number of assembly steps are needed. Furthermore, because the method involves first making a single FRP structure in which the joining member is embedded, and then splitting this into two separate FRP shafts, the alignment of the resulting universal joint assembly may be improved compared to previous approaches which require separate attachment and alignment of every component in the finished assembly.

In some sets of examples, the first pivot of the joining member is embedded within continuous fibre reinforcement of the first fibre-reinforced polymer shaft and the second pivot of the joining member is embedded within continuous fibre reinforcement of the second fibre-reinforced polymer shaft. It will be recognised that in such examples the first and/or second pivot is held in place mechanically by the continuous fibre reinforcement, rather than simply by adhesion to the polymer matrix.

According to a second aspect of the present disclosure there is provided a universal joint assembly comprising:
a first fibre-reinforced polymer shaft;
a second fibre-reinforced polymer shaft; and
a joining member comprising a first pivot embedded within continuous fibre reinforcement of the first fibre-reinforced polymer shaft and a second pivot embedded within continuous fibre reinforcement of the second fibre-reinforced polymer shaft, said joining member coupling the first fibre-reinforced polymer shaft to the second fibre-reinforced polymer shaft to form a universal joint.

This universal joint assembly may be smaller and/or lighter than previous assemblies, because (at least) two of its three elements are formed from fibre-reinforced polymer. The universal joint assembly may be better aligned and/or suffer reduced rotational backlash than previous assemblies because the pivots of the joining member are embedded within the continuous fibre reinforcement of the shafts rather than being attached separately.

In some examples, applying continuous fibre reinforcement to the form involves diverting continuous fibre reinforcement around the first and/or second pivot of the joining member. Correspondingly, continuous fibre reinforcement in which the first pivot is embedded may be diverted around the first pivot and/or continuous fibre reinforcement in which the second pivot is embedded may be diverted around the second pivot.

Diverting continuous fibres to accommodate a pivot rather than breaking fibres (e.g. by drilling a hole for the pivot in a completed FRP part) may allow the joint assembly to retain greater strength and rigidity, due to the high tensile strength of unbroken continuous fibres. By diverting the fibres around the pivot, the fibres retain their load bearing properties and the strength of the shaft is maintained even in the presence of the pivot (it will be appreciated that there may be some weakening of the structure in the immediate vicinity of the pivot, but much less than would arise from drilling to accommodate the pivot).

The continuous fibre reinforcement may be applied such that in the resulting shafts at least some fibres would be substantially parallel in the vicinity of the pivot(s), but for the diversion around the pivot(s). Thus, after the diversion, the fibres continue in the direction they would have taken if the pivot were not present. The continuous fibre reinforcement may comprise continuous fibres extending in a helix around an axis of the fibre-reinforced structure. Many of these fibres will be unaffected by the pivot(s) as their helical path does not intersect the pivot(s). These fibres will simply follow the same path that they would have followed if the pivot were not present. However, fibres which would have intersected the pivot may be displaced to one or other side of the pivot, such that the path of these fibres deviates from the path that they would have taken if the pivot were not present. Preferably the fibre path of each fibre diverted around the pivot forms an arc around the pivot of no more than 200 degrees, preferably an arc of no more than 180 degrees. Ideally, each diverted fibre will be diverted to the side of the pivot that requires the least divergence of its path and will thus contact the pivot along an arc of no more than 180 degrees. Indeed most fibres that are incident upon the pivot at a lateral offset from the pivot centre will contact the pivot along a much smaller arc. However, it will be appreciated that some process variation such as vibration or manufacturing irregularities in the forming machinery may result in a small number of fibres being displaced to the less efficient side of the pivot and thus a small number of these fibres may contact the pivot along an arc greater than 180 degrees. However, these may be kept to a minimum and are preferably entirely excluded.

In some examples, the first and/or second pivot contacts substantially no fibre ends, i.e. the first and/or second pivot is surrounded by only continuous fibre reinforcement.

In some examples, the first and/or second pivot comprises a fibre guiding extension that extends from the pivot. In such examples, the method may comprise diverting the continuous fibre reinforcement around the fibre guiding extension(s) of the first and/or second pivot. This may aid accurate application of the continuous fibre reinforcement around the pivots, e.g. helping to ensure that the joining member is securely embedded in the fibre-reinforced polymer structure and/or aiding the automation of some or all of the fibre application. The or each fibre guiding extension may have a conical shape. A conical fibre guiding extension may smoothly and naturally guide fibres to desired positions around the respective pivot. The or each fibre guiding extension may extend substantially parallel to or coaxial with a pivot axis of its respective pivot.

The or each fibre guiding extension may be removed during manufacture (once it has been used to guide the fibre), or it may form a permanent part of the joining member. The or each fibre guiding extension may be integral with its respective pivot, e.g. they may be machined from the same piece of material (e.g. metal). However, in some examples the or each fibre guiding extension is a separate part that is attached to its respective pivot, e.g. during assembly of the joining member. In some examples, the method comprises subsequently removing said fibre guiding extension(s). The fibre guiding extension(s) may be removed after the single fibre-reinforced polymer structure has been formed, or after the single fibre-reinforced polymer structure has been split into the first and second FRP shafts. Removing the fibre guiding extension(s) may involve physically separating an integral extension from the rest of the pivot (e.g. by snapping, machining or sawing the extension off from the rest of the pivot), or it may simply involve reversing an attachment process.

It will be recognised that using a fibre guiding extension may result in a single fibre-reinforced polymer structure in which the continuous fibre reinforcement surrounds the sides of a pivot, but in which the top of the pivot is substantially free from fibre. In such examples, the pivot may be held in position in place axially (along the pivot axis) by the surrounding continuous fibre reinforcement and polymer matrix. Because the continuous fibre reinforcement and the polymer matrix are applied directly to the pivot, the pivot will fit precisely within the FRP and thus be held securely without being separately locked in place, e.g. by a locking ring or a grub screw.

In some examples, the method comprises applying continuous fibre reinforcement such that the first and/or second pivot is entirely enclosed by continuous fibre. In examples that utilise fibre guiding extension(s), additional fibre may be applied on top of the pivot after the fibre guiding extension has been removed to enclose the pivot. In such examples the pivot may be mechanically constrained axially by the enclosing continuous fibre.

In some examples the first and/or second pivot may comprise one or more recesses or protrusions with which continuous fibre reinforcement and/or polymer matrix engages to hold the pivot in place axially. For instance, the first and/or second pivot may comprise a circumferential ridge or groove extending around a respective pivot axis with which the continuous fibre reinforcement and/or the polymer matrix engages to mechanically constrain the pivot within the first and/or second FRP shaft.

In some examples, the form comprises a sacrificial core that at least partially surrounds the joining member and around which the continuous fibre reinforcement is applied. In such examples the method comprises removing said sacrificial core.

The sacrificial core may help to guide the continuous fibre reinforcement into a desired position and/or orientation in the resulting FRP shafts. For instance, the sacrificial core may have a shape that, when removed, leaves behind a cavity within the universal joint that allows the first and second FRP shafts to rotate about the first and second pivots.

Because the sacrificial core is subsequently removed, it can partially, mostly or entirely surround the joining member without impacting on the operation of the resulting joint. The sacrificial core may help to hold the joining member in a correct position and/or orientation when it is embedded in the fibre-reinforced polymer structure. For instance, using a sacrificial core may allow the first and second pivots to be accurately oriented perpendicular to the axes along which the first and second FRP shafts will extend, ensuring proper operation of the resulting universal joint.

In some examples, the method comprises removing the sacrificial core after splitting the single fibre-reinforced structure. The sacrificial core may help to protect the joining member and/or the fibre-reinforced polymer structure during the splitting process. For instance, the sacrificial core may act as a physical barrier between a cutting instrument and the joining member during the splitting process, e.g. protecting the joining member from cutting debris.

In some examples, the method comprises removing the sacrificial core by mechanical or physical means, e.g. by washing out a sand core or by melting and draining a solid core. Additionally or alternatively, the sacrificial core may be removed by chemical means, e.g. by dissolving a soluble core.

In some examples, the single fibre-reinforced polymer structure comprises a shaft (e.g. a cylindrical shaft) extending along a central axis. This may facilitate the creation of first and second FRP shafts which are accurately aligned, because they are formed by splitting an inherently-aligned single fibre-reinforced polymer shaft. In such examples the continuous fibre reinforcement of the first fibre-reinforced polymer shaft will be aligned with continuous fibre reinforcement of the second fibre-reinforced polymer shaft when the first fibre-reinforced polymer shaft is aligned with the second fibre-reinforced polymer shaft.

The form may comprise a mandrel (e.g. a cylindrical mandrel) around which the continuous fibre reinforcement is applied. This may facilitate the creation of a single fibre-reinforced polymer structure comprising a shaft.

In a set of examples, the single fibre-reinforced polymer structure is formed around a single mandrel. The single mandrel may have a constant diameter, so that the resulting first and second FRP shafts have equal inner diameters. Forming the single fibre-reinforced polymer structure around a single mandrel may ensure that the resulting first and second FRP shafts are aligned accurately.

The joining member and/or the sacrificial core may be mounted to and/or around the mandrel before the continuous fibre reinforcement is applied. The method may comprise removing the joining member and/or the sacrificial core from the mandrel, e.g. after creating the single fibre-reinforced polymer structure or after splitting the single fibre-reinforced structure. The joining member may comprise a hole through which the mandrel passes. In some such examples, the hole in the joining member comprises an inner diameter that is equal to or greater than an inner diameter of the single fibre-reinforced polymer structure. In such examples the hole in the joining member thus comprises an inner diameter that is equal to or greater than an inner diameter of the first and/or second FRP shafts.

In some sets of examples, the form comprises two (or more) separate mandrels around which the single fibre-reinforced polymer structure is formed. For instance, the form may comprise a first mandrel around which fibre that will form the first FRP shaft is applied and a second mandrel around which fibre that will form the second FRP shaft is applied. This may be convenient, for instance, for forming first and second FRP shafts with different dimensions (e.g. different internal diameters). In such examples the joining member and/or the sacrificial core may be mounted to and/or around one or more of the separate mandrels.

The continuous fibre reinforcement applied to the form may comprise continuous fibre reinforcement that is pre-impregnated with the polymer matrix (e.g. the continuous fibre reinforcement may take the form of pre-preg tow). The continuous fibre reinforcement applied to the form may comprise continuous fibre reinforcement that is impregnated with a liquid polymer matrix just prior to being applied to the form (e.g. using a polymer bath, i.e. wet-wound fibre). In a set of examples, additionally or alternatively, the method comprises applying dry continuous fibre reinforcement to the form and subsequently introducing the polymer matrix. In some such examples the method comprises placing the applied dry continuous fibre reinforcement and the form into a mould, and then introducing the polymer matrix to the mould.

The polymer matrix may comprise a thermoplastic resin such as polyphenylene sulfide (PPS), polyether ether ketone (PEEK), polyetherketoneketone (PEKK), polyetherketone (PEK) or another polymer that is part of the polyaryletherketone (PAEK) family. In a set of examples the polymer matrix comprises a thermosetting resin such as an epoxy resin or a phenolic resin. In examples featuring a thermosetting resin, the method may comprise curing the polymer matrix. The method may comprise curing the polymer matrix to form the single fibre-reinforced structure (i.e. before splitting the single fibre-reinforced structure into the first and second FRP shafts). Curing the matrix before splitting (i.e. to form a rigid single fibre-reinforced structure) may ensure that the resulting first and second FRP shafts are accurately aligned.

The first and/or second fibre-reinforced polymer shaft may comprise continuous fibre reinforcement extending at a low angle to a central axis along which the respective first and/or second fibre-reinforced polymer shaft extends (referred to as low-angle fibre). For instance, the first fibre-reinforced polymer shaft may comprise continuous fibre reinforcement extending at less than 30° to the central axis, less than 20° to the central axis, less than 10° to the central axis, less than 5° to the central axis or even at 0° to the central axis. Low-angle fibre may provide a shaft with additional strength and/or stiffness in the axial direction.

In a set of examples, the method comprises braiding the continuous fibre reinforcement onto the form, e.g. using a fibre braiding machine. Advantageously, braiding the continuous fibre reinforcement may enable or simplify the application of low angle fibre. In some examples, additionally or alternatively, continuous fibre reinforcement may be applied with other techniques such as filament winding, Automated Fibre Placement (AFP) or manually laying up fibre fabrics.

The first and second pivots enable the respective first and second shafts to rotate relative to the joining member about respective first and second pivot axes. The joining member may have a central hub from which the first and second pivots extend. The first and/or second pivot may comprise a bushing. In a set of examples, the first and/or second pivot comprises a bearing, such as a roller bearing. As mentioned above, in some examples the joining member comprises a hole to accommodate a mandrel during manufacture. The hole may be formed in the central hub. The hole may extend perpendicular to the first and second pivot axes.

The universal joint assembly may comprise only one first pivot and one second pivot. However, in a set of examples the joining member comprises two coaxial first pivots embedded within continuous fibre reinforcement of the first fibre-reinforced polymer shaft and/or two coaxial second pivots embedded within continuous fibre reinforcement of the second fibre-reinforced polymer shaft. Using two coaxial pivots to couple a shaft to the joining member may result in a stronger and/or more stable universal joint. The coaxial first and/or second pivots may be provided on opposite sides of the respective first and/or second shafts. The joining member may comprise a cruciform shape. Opposing pairs of first and second pivots may extend from a central hub of the joining member.

The first and/or second FRP shafts may have a constant outer diameter along their entire length. However, in a set of examples, the first fibre-reinforced polymer shaft comprises a coupling region in which the first pivot of the joining member is embedded, and a main region extending away from the coupling region, wherein the main region has a different outer diameter to the coupling region. Additionally or alternatively, the second fibre-reinforced polymer shaft comprises a coupling region in which the second pivot of the joining member is embedded, and a main region extending away from the coupling region, wherein the main region has a different outer diameter to the coupling region.

The main region of the first and/or second FRP shaft may have a smaller outer diameter than the coupling region of the respective first and/or second FRP shaft. In such examples, the coupling region may be made large enough to accommodate the joining member but the main region can be made smaller to reduce a size and/or mass of the universal joint assembly. First and/or second FRP shafts with a larger coupling region than main region may be formed by applying the continuous fibre reinforcement to a suitably shaped sacrificial core and/or mandrel.

In a set of examples, the first and/or second fibre-reinforced polymer shaft comprises one or more regions with additional layers of fibre reinforcement. For instance, a coupling region, a main region and/or a transition region between the coupling and main regions may be reinforced with additional layers of fibre reinforcement to add strength and/or stiffness. Additional layers of fibre reinforcement in the first and/or second FRP shaft may be achieved by applying additional fibre reinforcement to one or more corresponding regions of the single fibre-reinforced polymer structure (e.g. by performing multiple passes of certain regions with a braiding machine).

The first fibre-reinforced polymer shaft is coupled to the second fibre-reinforced polymer shaft via the joining member to form a universal joint. It will be understood that to form such a universal joint assembly the first FRP shaft extends along a first central axis and is pivotally coupled to the joining member via the first pivot about a first pivot axis that extends perpendicularly to the first central axis. The second shaft extends along a second central axis and is pivotally coupled to the joining member via the second pivot about a second pivot axis that extends perpendicularly to the second central axis. The first and second pivot axes are perpendicular to each other. This arrangement allows the universal joint assembly to transfer rotational motion of the first FRP shaft about the first central axis to rotational motion of the second FRP shaft about the second central axis.

The universal joint assembly may be arranged to transfer rotational motion when the first and second FRP shafts (i.e. the central axes of the first and second FRP shafts) are angularly offset by up to 5°, up to 10°, up to 15° or even up to 20° or more. The universal joint assembly may be suitable for use in an actuator within an aeroplane wing. Accordingly, the present disclosure extends to an aeroplane wing actuator comprising a universal joint assembly as disclosed herein.

In a set of examples, the joining member comprises a metal, such as aluminium or stainless steel. The continuous fibre reinforcement in the first and/or second shaft may comprise carbon fibres, glass fibres, aramid fibres, boron fibres or polymer fibres.

Features of any aspect or example described herein may, wherever appropriate, be applied to any other aspect or example described herein. Where reference is made to different examples, it should be understood that these are not necessarily distinct but may overlap.

### Detailed Description

One or more non-limiting examples will now be described, by way of example only, and with reference to the accompanying figures in which:
Figure 1 is a schematic view of a universal joint assembly according to an example of the present disclosure;
Figure 2 is a cross section of the universal joint assembly shown in Figure 1;
Figure 3 shows the joining member of the universal joint assembly in more detail;
Figures 4-10 illustrate various steps in a method of manufacturing the universal joint assembly shown in Figure 1; and
Figure 11 shows an aeroplane with an aeroplane wing actuator comprising the universal joint assembly shown in Figure 1.

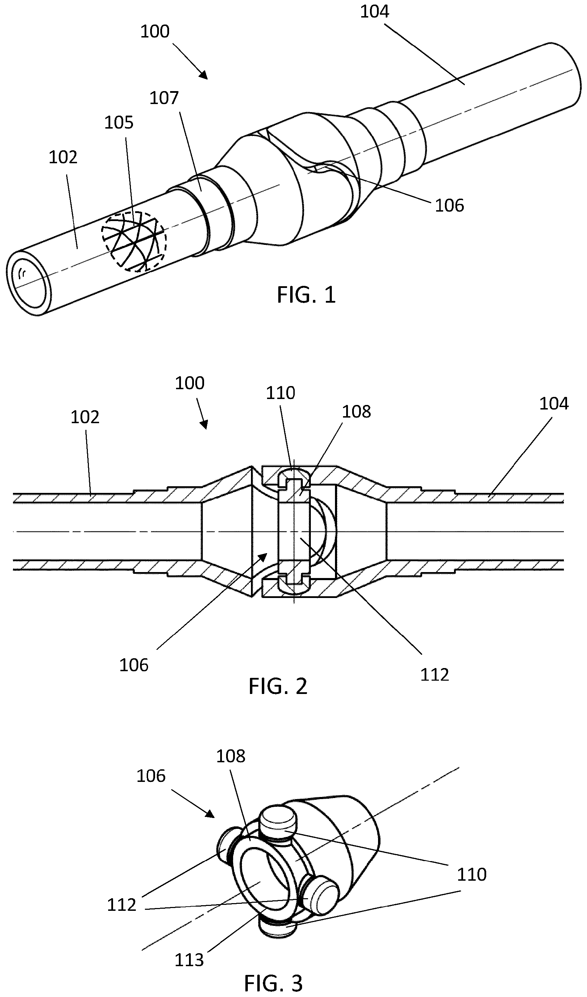

Figures 1 and 2 illustrate a universal joint assembly 100 comprising a first fibre-reinforced polymer (FRP) shaft 102, a second FRP shaft 104 and a joining member 106.

The first and second FRP shafts 102, 104 comprise continuous fibre reinforcement (e.g. continuous carbon fibre reinforcement) within a polymer matrix (e.g. epoxy).).

The continuous fibre reinforcement extends in several different directions and, in this example, includes zero degree fibre 105 that extends at 0° to the axes in which the shafts 102, 104 extend. The first and second FRP 102, 104 shafts also comprise several regions of additional fibre reinforcement 107, e.g. to provide additional stiffness and/or strength to the universal joint assembly 100.

The first and second FRP shafts 102, 104 are coupled together with the joining member 106.

The joining member 106 is shown in Figure 3. The joining member 106 has a cruciform shape and comprises a central hub 108 from which two first pivots 110 and two second pivots 112 extend. The first pivots 110 are coaxial and extend along a first pivot axis. The second pivots 112 are coaxial and extend along a second pivot axis. The first pivot axis is perpendicular to the second pivot axis.

Each of the first and second pivots 110, 112 comprises a pivot lug that extends from the central hub 108 and a bearing that can rotate about the pivot lug, i.e. about the corresponding first or second pivot axis. The central hub 108 defines a hole 113 which extends perpendicular to the first and second pivot axes.

In the universal joint assembly 100, the bearings of the first pivots 110 are embedded within continuous fibre reinforcement of the first FRP shaft 102. The continuous fibre reinforcement of the first FRP shaft 102 is diverted, unbroken, around the bearings of the first pivots 110. The first FRP shaft 102 is thus firmly attached to the bearings of the first pivots 110. In this example no adhesive is needed to fix the first FRP shaft 102 to the bearings of the first pivots 110.

The first pivots 110 are attached to the first FRP shaft 102 such that the first pivot axis is perpendicular to the axis along which the first FRP shaft 102 extends. The first FRP shaft 102 is thus able to rotate relative to the central hub 108 of the joining member 106 about an axis perpendicular to the direction in which it extends.

Similarly, the bearings of the second pivots 112 are embedded within continuous fibre reinforcement of the second FRP shaft 104. The continuous fibre reinforcement of the second FRP shaft 104 is diverted, unbroken, around the bearings of the second pivots 112. The second FRP shaft 104 is thus firmly attached to the bearings of the second pivots 112. In this example no adhesive is needed to fix the second FRP shaft 104 to the bearings of the second pivots 112.

The second pivots 112 are attached to the second FRP shaft 104 such that the second pivot axis is perpendicular to the axis along which the second FRP shaft 104 extends. The second FRP shaft 104 is thus also able to rotate relative to the central hub 108 of the joining member 106 about an axis perpendicular to the direction in which it extends.

The first and second FRP shafts 102, 104 are thus coupled by the joining member 106 to form a universal joint. When the first FRP shaft 102 is rotated about the axis along which it extends, this rotational movement is transmitted through the joining member 106 to rotate the second FRP shaft 104 about the axis along which it extends, even when the first and second shafts 102, 104 are not aligned.

The universal joint assembly 100 thus features only three main parts: the FRP shafts 102 and the joining member 106. The shafts 102, 104 are coupled directly to the joining member 106 without the need for end connectors on each shaft. The joint assembly 100 thus has only a limited number of joins where misalignments or rotational backlash could be introduced. Furthermore, as explained below, the universal joint assembly 100 can be manufactured efficiently with only a small number of assembly steps.

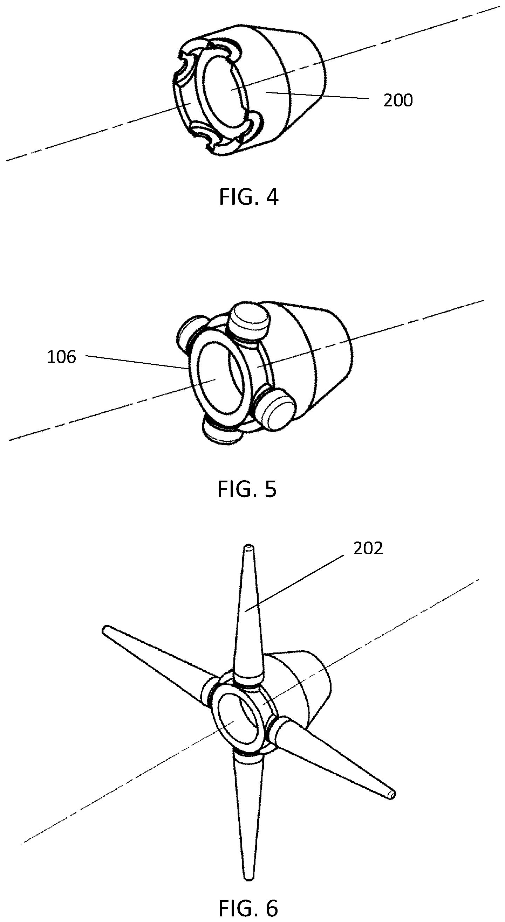

Figures 4-9 illustrate a method for manufacturing the universal joint assembly 100.

In a first step shown in Figure 4, a sacrificial core 200 is formed (e.g. by moulding, machining or 3D printing). The sacrificial core 200 comprises two symmetrical halves, with only one half shown in Figure 4. The sacrificial core 200 is shaped to form a void within the final universal joint assembly 100 which reduces mass and allows the universal joint to function.

In the next step, shown in Figure 5, the two halves of the sacrificial core 200 are fitted around the joining member 106. Again, for clarity, only one half of the sacrificial core 200 is shown in Figure 5. The sacrificial core 200 ensures that the joining member 106 is held in exactly the right position and orientation throughout the manufacturing process.

Figure 6 shows an optional step of fitting braiding spikes 202 (or, more generally, fibre-diverting spikes) to the bearings of the joining member 106. These spikes 202 may be used to guide reinforcing fibres around the bearings during the subsequent fibre braiding (or other fibre placement) step.

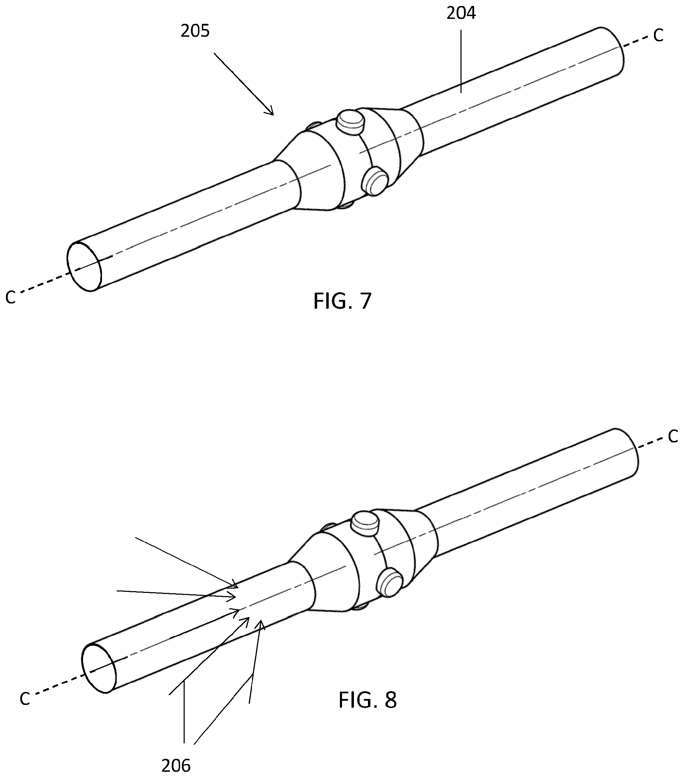

In the next step, illustrated in Figure 7, the core 200 and the joining member 106 are mounted on to a cylindrical mandrel 204 to create a form 205. The mandrel 204 extends along a central axis C that is perpendicular to the first and second pivot axes of the joining member 106. The mandrel 204 passes through the hole 113 in the central hub 108 of the joining member 106. The mandrel 204 has a diameter which is approximately equal to the inner diameter of the hole 113.

In the next step, illustrated in Figure 8, a braiding machine (not shown) is used to apply continuous dry fibre reinforcement 206 over the mandrel 204, the core 200 and the joining member 106. The use of braiding allows the continuous reinforcing fibre 206 to extend in many different directions, including at 0° to the central axis C. The braiding machine may pass over some parts of the mandrel 204 several times to form regions of additional fibre reinforcement.

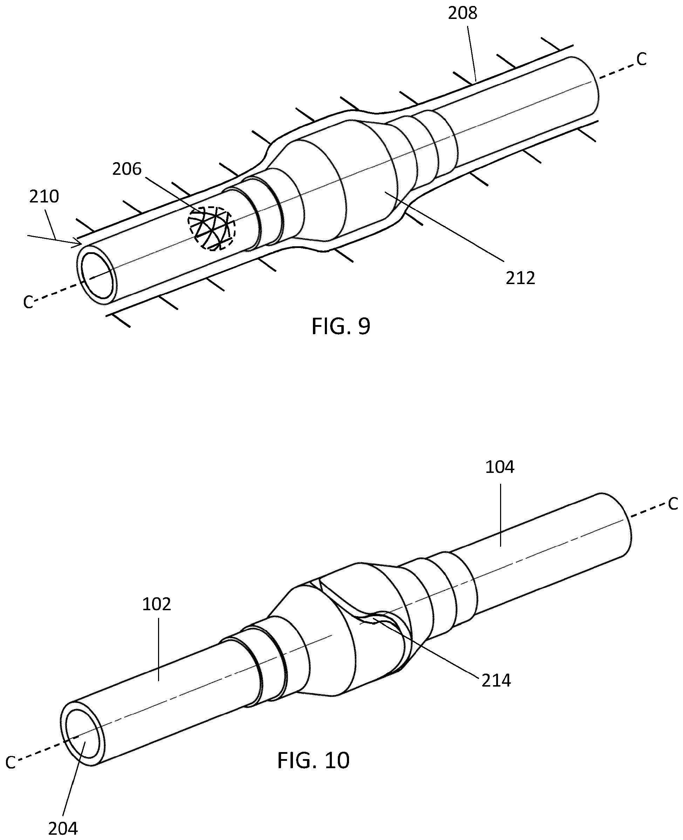

As illustrated in Figure 9, the entire assembly is then placed into a mould 208, and a polymer matrix 210 is introduced which impregnates the continuous fibre reinforcement 206. The polymer matrix 210is then cured to form a single fibre-reinforced polymer structure 212 in which the joining member is embedded.

Because the inner diameter of the hole 113 in the central hub 108 is approximately equal to the diameter of the mandrel 204, the inner diameter of the hole 113 is also approximately equal to the inner diameter of the single fibre-reinforced polymer structure 212 (and thus approximately equal to the inner diameter of the resulting first and second FRP shafts 102, 104).

Then, as illustrated in Figure 10, the single fibre-reinforced polymer structure 212 is split into a first FRP shaft 102 and a second FRP shaft 104 by machining a groove 214. The groove 214 is machined to leave the first pivots 110 embedded in continuous fibre reinforcement of the first FRP shaft 102 and the second pivots 112 embedded in continuous fibre reinforcement of the second FRP shaft 104. The sacrificial core 200 protects the joining member 106 during this machining process. The first and second FRP shafts 102, 104 are thus formed from continuous fibre reinforcement that was wound onto a single mandrel 204, which ensures that they are accurately aligned.

Finally, the mandrel 204 is removed, and the sacrificial core 200 is washed out or otherwise removed to leave behind the universal joint assembly 100 shown in Figure 1.

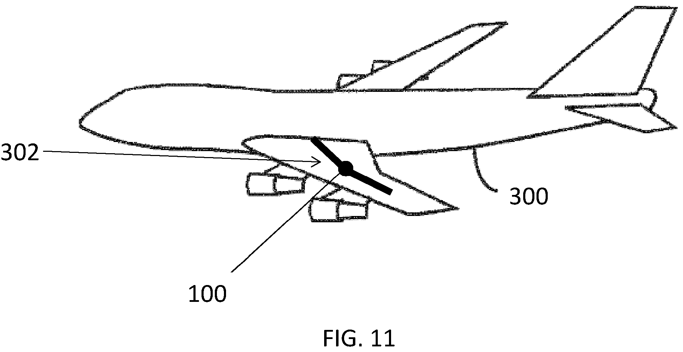

As shown in Figure 11, in this example the universal joint assembly 100 comprises part of an aeroplane wing actuator 302 of a aeroplane 300. The universal joint assembly 100 allows rotational motion to be transferred along the actuator as it flexes with the wing during flight.

While the disclosure has been described in detail in connection with only a limited number of examples, it should be readily understood that the disclosure is not limited to such disclosed examples. Accordingly, the disclosure is not to be seen as limited by the foregoing description, but is only limited by the scope of the appended claims.

## Claims

1. A method of producing a universal joint assembly (100) comprising:
providing a joining member (106) for forming a universal joint, said joining member comprising a first pivot (110) and a second pivot (112);
applying continuous fibre reinforcement (206) and a polymer matrix (210) to a form (206) including said joining member to create a single fibre-reinforced polymer structure (212) in which the joining member is embedded; and
splitting said single fibre-reinforced structure into a first fibre-reinforced polymer shaft (102) and a second fibre-reinforced polymer shaft (104) that are coupled together by the joining member to form a universal joint.

2. The method of claim 1, wherein the first pivot of the joining member is embedded within continuous fibre reinforcement of the first fibre-reinforced polymer shaft and the second pivot of the joining member is embedded within continuous fibre reinforcement of the second fibre-reinforced polymer shaft.

3. The method of claim 1 or 2, wherein the form comprises a sacrificial core that at least partially surrounds the joining member and around which the continuous fibre reinforcement is applied, and the method comprises removing said sacrificial core after splitting the single fibre-reinforced structure.

4. The method of any preceding claim, wherein the form comprises a single mandrel around which the continuous fibre reinforcement is applied.

5. The method of any preceding claim, comprising braiding the continuous fibre reinforcement onto the form.

6. The method of any preceding claim, comprising guiding the continuous fibre reinforcement around conical fibre guiding extensions of the first and second pivots of the joining member, and subsequently removing said conical fibre guiding extensions.

7. The method of any preceding claim, comprising applying dry continuous fibre reinforcement to the form, placing the dry continuous fibre reinforcement and the form into a mould, and then introducing the polymer matrix to the mould.

8. A universal joint assembly (100) comprising:
a first fibre-reinforced polymer shaft (102);
a second fibre-reinforced polymer shaft (104); and
a joining member (106) comprising a first pivot (110) embedded within continuous fibre reinforcement (206) of the first fibre-reinforced polymer shaft and a second pivot (112) embedded within continuous fibre reinforcement of the second fibre-reinforced polymer shaft (104), said joining member coupling the first fibre-reinforced polymer shaft to the second fibre-reinforced polymer shaft to form a universal joint.

9. The universal joint assembly of claim 8, wherein the continuous fibre reinforcement of the first fibre-reinforced polymer shaft in which the first pivot is embedded is diverted around the first pivot.

10. The universal joint assembly of claim 8 or 9, wherein continuous fibre reinforcement of the first fibre-reinforced polymer shaft is aligned with continuous fibre reinforcement of the second fibre-reinforced polymer shaft when the first fibre-reinforced polymer shaft is aligned with the second fibre-reinforced polymer shaft.

11. The universal joint assembly of any of claims 8-10, wherein the first fibre-reinforced polymer shaft comprises continuous fibre reinforcement that extends parallel to an axis along which the first fibre-reinforced polymer shaft extends.

12. The universal joint assembly of any of claims 8-11, wherein the joining member comprises a hole with an inner diameter that is equal to or greater than an inner diameter of the first fibre-reinforced polymer shaft and/or the second fibre-reinforced polymer shaft.

13. The universal joint assembly of any of claims 8-12, wherein the joining member comprises two coaxial first pivots embedded within continuous fibre reinforcement of the first fibre-reinforced polymer shaft and two coaxial second pivots embedded within continuous fibre reinforcement of the second fibre-reinforced polymer shaft.

14. The universal joint assembly of any of claims 8-13, wherein the first fibre-reinforced polymer shaft comprises a coupling region in which the first pivot of the joining member is embedded, and a main region extending away from the coupling region, wherein the main region has a smaller diameter than the coupling region.

15. The universal joint assembly of any of claims 8-14, wherein the first fibre-reinforced polymer shaft comprises one or more regions with additional layers of fibre reinforcement.

## Patentansprüche

1. Verfahren zur Herstellung einer Universalgelenkanordnung (100), umfassend:
Bereitstellen eines Verbindungselements (106) zum Bilden eines Universalgelenks, wobei das Verbindungselement einen ersten Drehpunkt (110) und einen zweiten Drehpunkt (112) umfasst;
Aufbringen einer Endlosfaserverstärkung (206) und einer Polymermatrix (210) auf eine Form (205), die das Verbindungselement beinhaltet, um eine einzelne faserverstärkte Polymerstruktur (212) zu erzeugen, in die das Verbindungselement eingebettet ist; und
Aufteilen der einzelnen faserverstärkten Struktur in eine erste faserverstärkte Polymerwelle (102) und eine zweite faserverstärkten Polymerwelle (104), die durch das Verbindungselement miteinander gekoppelt sind, um ein Universalgelenk zu bilden.

2. Verfahren nach Anspruch 1, wobei der erste Drehpunkt des Verbindungselements in eine Endlosfaserverstärkung der ersten faserverstärkten Polymerwelle eingebettet ist und der zweite Drehpunkt des Verbindungselements in eine Endlosfaserverstärkung der zweiten faserverstärkten Polymerwelle eingebettet ist.

3. Verfahren nach Anspruch 1 oder 2, wobei die Form einen Opferkern umfasst, der das Verbindungselement mindestens teilweise umgibt und um den die Endlosfaserverstärkung aufgebracht wird, und wobei das Verfahren Entfernen des Opferkerns nach dem Aufteilen der einzelnen faserverstärkten Struktur umfasst.

4. Verfahren nach einem der vorhergehenden Ansprüche, wobei die Form einen einzelnen Dorn umfasst, um den die Endlosfaserverstärkung aufgebracht wird.

5. Verfahren nach einem der vorhergehenden Ansprüche, umfassend Flechten der Endlosfaserverstärkung auf die Form.

6. Verfahren nach einem der vorhergehenden Ansprüche, umfassend Führen der Endlosfaserverstärkung um konische Faserführungserstreckungen des ersten und des zweiten Drehpunkts des Verbindungselements und anschließendes Entfernen der konischen Faserführungserstreckungen.

7. Verfahren nach einem der vorhergehenden Ansprüche, umfassend Aufbringen einer trockenen Endlosfaserverstärkung auf die Form, Platzieren der trockenen Endlosfaserverstärkung und der Form in eine Gussform und dann Einlegen der Polymermatrix in die Form.

8. Universalgelenkanordnung (100), umfassend:
eine erste faserverstärkte Polymerwelle (102);
eine zweite faserverstärkte Polymerwelle (104); und
ein Verbindungselement (106), das einen ersten Drehpunkt (110), der in eine Endlosfaserverstärkung (206) der ersten faserverstärkten Polymerwelle eingebettet ist, und einen zweiten Drehpunkt (112), der in eine Endlosfaserverstärkung der zweiten faserverstärkten Polymerwelle (104) eingebettet ist, umfasst, wobei das Verbindungselement die erste faserverstärkte Polymerwelle mit der zweiten faserverstärkten Polymerwelle koppelt, um ein Universalgelenk zu bilden.

9. Universalgelenkanordnung nach Anspruch 8, wobei die Endlosfaserverstärkung der ersten faserverstärkten Polymerwelle, in die der erste Drehpunkt eingebettet ist, um den ersten Drehpunkt herumgeleitet ist.

10. Universalgelenkanordnung nach Anspruch 8 oder 9, wobei die Endlosfaserverstärkung der ersten faserverstärkten Polymerwelle mit der Endlosfaserverstärkung der zweiten faserverstärkten Polymerwelle ausgerichtet ist, wenn die erste faserverstärkte Polymerwelle mit der zweiten faserverstärkten Polymerwelle ausgerichtet ist.

11. Universalgelenkanordnung nach einem der Ansprüche 8-10, wobei die erste faserverstärkte Polymerwelle eine Endlosfaserverstärkung umfasst, die parallel zu einer Achse verläuft, entlang der sich die erste faserverstärkte Polymerwelle erstreckt.

12. Universalgelenkanordnung nach einem der Ansprüche 8-11, wobei das Verbindungselement ein Loch mit einem Innendurchmesser umfasst, der gleich oder größer als ein Innendurchmesser der ersten faserverstärkten Polymerwelle und/oder der zweiten faserverstärkten Polymerwelle ist.

13. Universalgelenkanordnung nach einem der Ansprüche 8-12, wobei das Verbindungselement zwei koaxiale erste Drehpunkte, die in eine Endlosfaserverstärkung der ersten faserverstärkten Polymerwelle eingebettet sind, und zwei koaxiale zweite Drehpunkte, die in eine Endlosfaserverstärkung der zweiten faserverstärkten Polymerwelle eingebettet sind, umfasst.

14. Universalgelenkanordnung nach einem der Ansprüche 8-13, wobei die erste faserverstärkte Polymerwelle einen Kupplungsbereich, in den der erste Drehpunkt des Verbindungselements eingebettet ist, und einen Hauptbereich, der sich von dem Kupplungsbereich weg erstreckt, umfasst, wobei der Hauptbereich einen kleineren Durchmesser als der Kupplungsbereich aufweist.

15. Universalgelenkanordnung nach einem der Ansprüche 8-14, wobei die erste faserverstärkte Polymerwelle einen oder mehrere Bereiche mit zusätzlichen Schichten aus Faserverstärkung umfasst.

## Revendications

1. Procédé de fabrication d'un ensemble joint universel (100) comprenant :
la fourniture d'un élément de jonction (106) pour former un joint universel, ledit élément de jonction comprenant un premier pivot (110) et un deuxième pivot (112) ;
l'application d'un renfort en fibres continues (206) et d'une matrice polymère (210) à une forme (205) comprenant ledit élément de jonction pour créer une structure polymère unique renforcée de fibres (212) dans laquelle l'élément de jonction est intégré ; et
la division de ladite structure unique renforcée de fibres en un premier arbre polymère renforcé de fibres (102) et un second arbre polymère renforcé de fibres (104) qui sont accouplés par l'élément de jonction pour former un joint universel.

2. Procédé selon la revendication 1, dans lequel le premier pivot de l'élément de jonction est intégré à un renfort en fibres continues du premier arbre polymère renforcé de fibres et le second pivot de l'élément de jonction est intégré à un renfort en fibres continues du second arbre polymère renforcé de fibres.

3. Procédé selon la revendication 1 ou 2, dans lequel la forme comprend un noyau sacrificiel qui entoure au moins partiellement l'élément de jonction et autour duquel le renfort en fibres continues est appliqué, et le procédé comprend le retrait dudit noyau sacrificiel après la division de la structure unique renforcée de fibres.

4. Procédé selon une quelconque revendication précédente, dans lequel la forme comprend un mandrin unique autour duquel le renfort en fibres continues est appliqué.

5. Procédé selon une quelconque revendication précédente, comprenant le tressage du renfort en fibres continues sur la forme.

6. Procédé selon une quelconque revendication précédente, comprenant le guidage du renfort en fibres continues autour d'extensions de guidage en fibres coniques des premier et second pivots de l'élément de jonction, puis le retrait desdites extensions de guidage en fibres coniques.

7. Procédé selon une quelconque revendication précédente, comprenant l'application d'un renfort en fibres continues sèches à la forme, le placement du renfort en fibres continues sèches et de la forme dans un moule, puis l'introduction de la matrice polymère dans le moule.

8. Ensemble joint universel (100) comprenant :
un premier arbre en polymère renforcé de fibres (102) ;
un second arbre en polymère renforcé de fibres (104) ; et
un élément de jonction (106) comprenant un premier pivot (110) intégré à un renfort en fibres continues (206) du premier arbre en polymère renforcé de fibres et un second pivot (112) intégré à un renfort en fibres continues du second arbre en polymère renforcé de fibres (104), ledit élément de jonction couplant le premier arbre en polymère renforcé de fibres au second arbre en polymère renforcé de fibres pour former un joint universel.

9. Ensemble joint universel selon la revendication 8, dans lequel le renfort en fibres continues du premier arbre en polymère renforcé de fibres dans lequel le premier pivot est intégré est dévié autour du premier pivot.

10. Ensemble joint universel selon la revendication 8 ou 9, dans lequel le renfort en fibres continues du premier arbre en polymère renforcé de fibres est aligné avec le renfort en fibres continues du second arbre en polymère renforcé de fibres lorsque le premier arbre en polymère renforcé de fibres est aligné avec le second arbre en polymère renforcé de fibres.

11. Ensemble joint universel selon l'une quelconque des revendications 8 à 10, dans lequel le premier arbre en polymère renforcé de fibres comprend un renfort en fibres continues qui se prolonge parallèlement à un axe le long duquel le premier arbre en polymère renforcé de fibres se prolonge.

12. Ensemble joint universel selon l'une quelconque des revendications 8 à 11, dans lequel l'élément de jonction comprend un trou avec un diamètre intérieur qui est égal à ou supérieur à un diamètre intérieur du premier arbre en polymère renforcé de fibres et/ou du second arbre en polymère renforcé de fibres.

13. Ensemble joint universel selon l'une quelconque des revendications 8 à 12, dans lequel l'élément de jonction comprend deux premiers pivots coaxiaux intégrés à un renfort en fibres continues du premier arbre en polymère renforcé de fibres et deux seconds pivots coaxiaux intégrés à un renfort en fibres continues du second arbre en polymère renforcé de fibres.

14. Ensemble joint universel selon l'une quelconque des revendications 8 à 13, dans lequel le premier arbre en polymère renforcé de fibres comprend une région de couplage dans laquelle le premier pivot de l'élément de jonction est intégré, et une région principale se prolongeant à l'opposé de la région de couplage, dans lequel la région principale a un diamètre inférieur à celui de la région de couplage.

15. Ensemble joint universel selon l'une quelconque des revendications 8 à 14, dans lequel le premier arbre en polymère renforcé de fibres comprend une ou plusieurs régions avec des couches supplémentaires de renfort en fibres.
